**Europäisches Patentamt**

**European Patent Office**

**Office européen des brevets**

(19)

(11) Publication number: **0 232 613**
**A2**

(12) # EUROPEAN PATENT APPLICATION

(21) Application number: **86309928.9**

(22) Date of filing: **18.12.86**

(51) Int. Cl.⁴: **G 01 N 29/04**

(30) Priority: **27.01.86 US 823034**

(43) Date of publication of application: **19.08.87**
**Bulletin 87/34**

(84) Designated Contracting States: **DE ES GB IT**

(71) Applicant: **THE BABCOCK & WILCOX COMPANY,**
**1010 Common Street P.O. Box 60035, New Orleans**
**Louisiana 70160 (US)**

(72) Inventor: **Latimer, Paul Jerry, 303 Juniper Drive,**
**Lynchburg VA 24502 (US)**

(74) Representative: **Cotter, Ivan John et al, D. YOUNG &**
**CO. 10 Staple Inn, London WC1V 7RD (GB)**

(54) **Detection of hydrogen damage in boiler tubes.**

(57) Angle-beam ultrasonic shear-waves, which are introduced by a transducer (10; 20; 30) via a pitch-catch technique in an axial or circumferential direction into a boiler tube (14; 24; 34), are detected and used to detect the presence of hydrogen damage (15; 35) in the boiler tube.

ACTORUM AG

1

## DETECTION OF HYDROGEN DAMAGE IN BOILER TUBES

This invention relates to the testing of boiler tubes to detect hydrogen damage.

In recent years, a number of boiler tube failures have been attributed to hydrogen damage. Hydrogen damage is caused by the diffusion of hydrogen through steel reacting with carbon to form methane, which builds up local stresses at the grain boundaries, forming microfissures that propagate radially from the inner (waterside) surface of the tube towards the outer (fireside) surface.

Hydrogen damage is usually associated with a corrosive process and some type of triggering mechanism such as overheating. The hydrogen typically forms under a corrosion deposit. Hydrogen is formed by a corrosive reaction, between the tube metal and the corrosion deposit, that acts as a triggering mechanism which causes water to dissociate into hydrogen. The hydrogen more readily diffuses into the metal through the corrosion deposit. Once in the metal, the hydrogen interacts with carbon in the steel to form methane. The larger methane molecules cannot diffuse out of the metal. Consequently, high pressure areas are formed which create microfissuring at the grain boundaries and, ultimately, a form of tube failure, known as blowout, that is characterised by a thick-lipped fracture.

Some ultrasonic techniques have been used to detect hydrogen damage or corrosion in fossil boiler tubes with only limited success. However, known ultrasonic testing techniques have been unable to detect hydrogen damage underneath welds and field tests indicate that damage underneath the weld does not extend beyond the weld itself. The inability to detect localised areas of hydrogen damage underneath welds has been a major concern. For this reason, visual inspection of welds or total replacement of tubes with a failure history have been undertaken at great inconvenience and expense to avoid tube failures due to hydrogen damage at weld areas.

According to a first aspect of the invention there is provided a method of ultrasonically testing a boiler tube for detecting hydrogen

2         0232613

damage, the method comprising the steps of transmitting an ultrasonic pulse of shear-waves into the wall of the boiler tube through a predetermined path, receiving the pulse at the end of the path, measuring relative attenuation of the amplitude of the received pulse, and comparing said relative attenuation with a reference relative attenuation.

According to a second aspect of the invention there is provided a method of ultrasonically testing a boiler tube for detecting hydrogen damage, the method comprising positioning a plurality of shear-wave angle-beam transducers at spaced locations on the outer surface of the boiler tube, a first one of the transducers being positioned for transmitting ultrasonic waves into the tube at a predetermined angle so that the waves travel along a predetermined path and a second one of the transducers being positioned at the end of the path for receiving the waves, energising the first one of the transducers to transmit an ultrasonic pulse of shear-waves along the path to the second one of the transducers, and measuring the amplitude of waves received by the second one of the transducers to detect the presence of hydrogen damage within the tube.

According to embodiments of the invention described in detail hereinbelow, ultrasound is used to detect hydrogen damage in boiler tubes by measuring the attenuation in the amplitude of angle-beam ultrasonic shear-waves that occurs as waves pass through the damaged area.

The ultrasound can be introduced and received in a reflected pitch-catch mode in the axial and circumferential directions of the boiler tube.

A technique employed in a first embodiment of the invention utilises an ultrasonic search unit arrangement in which transmitting and receiving transducers are arranged at axially aligned and spaced positions on the outer surface of the tube. The ultrasonic waves are transmitted by the transmitting transducer at an oblique angle of incidence, with respect to the tube axis, and received at an oblique angle of emergence by the receiving transducer. In accordance with a second embodiment of the invention, transmitting and receiving transducers are arranged at circumferentially aligned and spaced positions on the outer surface of the tube. The ultrasonic waves are transmitted from the transmitting transducer circumferentially within the tube wall along a segment of the tube and received by the receiving transducer.

The circumferential technique permits rapid scanning of straight sections of boiler tubing for damage. The axial and circumferential techniques are complementary. Both the axial and circumferential techniques can be used to detect the same damaged area from different directions of sound propagation. The use of both techniques increases the confidence level of the results.

In accordance with a feature of the first and second embodiments, the transmitting and receiving transducers are located symetrically about a weld in a boiler tube. Ultrasound is introduced on one side of the weld and received on the other side. The axial technique has been found to be particularly effective in the detection of hydrogen damage to welded areas.

In accordance with a third embodiment of the invention, an electromagnetic acoustic transducer (EMAT) is utilised to introduce an angle-beam shear-wave into the boiler tube which is transmitted circumferentially through the wall of the tube and received by the same transducer. Relative attenuation is compared to relative attenuation of an undamaged tube to detect the presence of hydrogen damage.

The invention will now be further described, by way of illustrative and non-limiting example, with reference to the accompanying drawings, in which like references designate like or corresponding parts throughout, and in which:

Figure 1 represents a schematic side view of a U-bend area of a boiler tube on which axially aligned and spaced transmitting and receiving transducers have been mounted to carry out a method embodying the invention;

Figure 2 is a schematic end view of a tube in which circumferentially aligned and spaced transmitting and receiving transducers have been mounted to carry out a method embodying the invention;

Figure 3 shows a waveform of a signal from an undamaged area of a boiler tube using an axial angle-beam pitch-catch method or technique embodying the invention;

Figure 4 shows a waveform of a signal from a hydrogen damaged area of the boiler tube of Figure 1 using the axial angle-beam pitch-catch method or technique embodying the invention; and

Figure 5 is a schematic representation of the mounting of an electromagnetic acoustic transducer and a sound path of an ultrasonic pulse transmitted and received thereby to carry out a method embodying the invention.

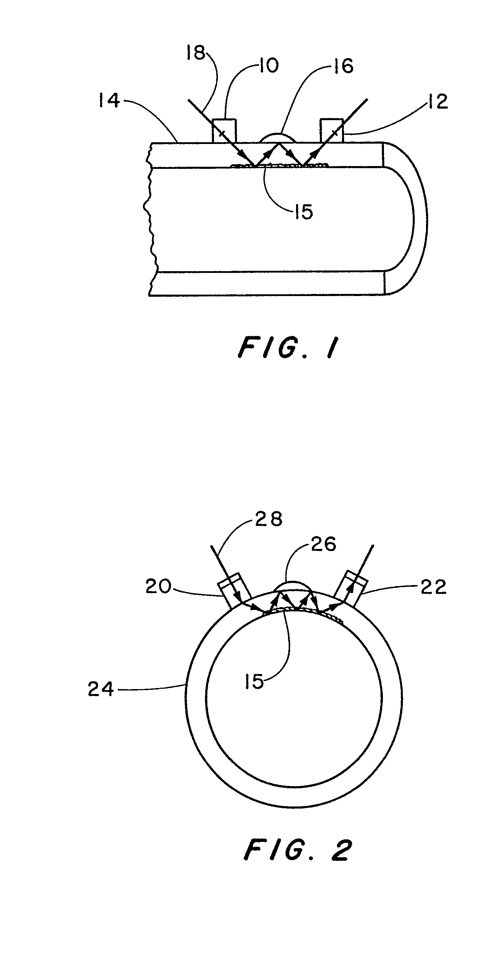

Figure 1 schematically illustrates an angle-beam contact type ultrasonic search unit arrangement which comprises a transmitting or sending transducer 10 and a receiving transducer 12 mounted to the outside of one leg of a U-tube 14 on opposite sides of a weld 16 joining segments of the tube.

Figure 2 illustrates an angle-beam contact type search unit arrangement comprising a transmitting or sending transducer 20 and a receiving transducer 22 mounted at circumferentially spaced positions on the outer surface of a tube 24 on opposite sides of a weld 26 joining segments of the tube.

The transducers 10,12,20,22, which are shear-wave angle-beam transducers, are typically mounted in a search unit that comprises wedges (not shown) having inclined surfaces to which the transducer is mounted to provide a desired angle of incidence or reception of ultrasonic sound waves which are transmitted through the tube being tested. The tube contact surface of the search units is provided with a curvature which corresponds to and fits the curvature of the tube 14,24. For practicing the techniques disclosed herein, the search units may comprise suitable known angle-beam contact type constructions for circumferential and longitudinal tube inspections.

In operation, as shown in Figure 1, the transmitting transducer 10 and receiving transducer 12 are arranged on the outer surface of the tube 14 in axial alignment. In the illustrated arrangement, the transducers 10,12 are positioned at equal distances from opposite sides of the weld 16. The differences in relative attentuation in scanning occuring in an undamaged area and a hydrogen damaged area 15 are used to detect hydrogen damage. Relative attenuation is variable throughout a damaged area. Hence, as used herein, the expression "attenuation" refers to the average relative drop in signal amplitude over the damaged area.

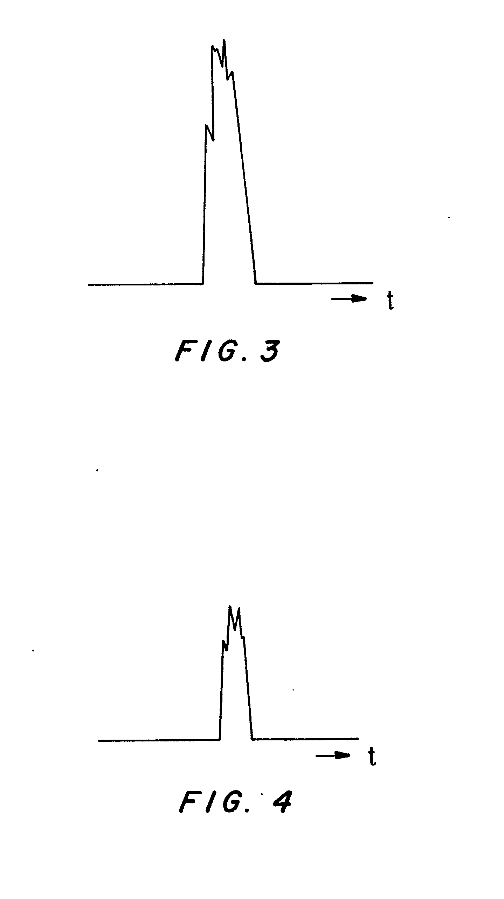

The ultrasonic transmitting transducer 10 is energised to transmit a pulse of ultrasonic shear-waves along a path 18 into the tube 14 at a predetermined beam-angle, preferably sixty degrees for steel tubes, relative to the tube surface. The use of two 5 MHz miniature sixty-degree angle-beam transducers with a 6.35mm (0.25inch) active element is preferred. The receiving transducer 12 receives the wave, which, if hydrogen damage is present, has been subjected to attenuation. A comparison of the signal in the damaged and undamaged areas of a tube segment, resulting from an actual test in which the present axial angle-beam pitch-catch technique was used, is illustrated by Figures 3 and 4. The test indicated that there was an average relative decrease of 6 dB in signal amplitude with a transducer separation of 31.75mm (1.25inches).

Similarly, a circumferential arrangement comprising the shear-wave angle-beam transducers 20,22 can be employed wherein the transducers are circumferentially aligned and spaced as illustrated in Figure 2. The transmitting transducer 20 is energised to transmit a pulse of ultrasonic shear-waves along a path 28 into the tube 24. Forty-five degree shear-wave wedges are preferred. An ultrasonic pulse is received by the receiving transducer 22. The circumferentially spaced transducers 20,22 should be positioned about the tube with an angular spacing of less than 180 degrees between them.

Testing has indicated that there is little change in relative attenuation over a test frequency of 2.25 MHz to 10 MHz. Especially good results are obtainable at a frequency of 5 MHz.

The surface of the tube to be inspected must be cleaned to a shiny metal condition and an adequate amount of couplant with low attenuation properties must be provided between the transducers and the tube surface in order to obtain meaningful attenuation measurements. A coupling marketed under the tradename Ultragel II, by Johnson & Johnson, Louistown, Pennsylvania, U.S.A., has been found to be suitable.

In both the axial and circumferential angle-beam pitch-catch techniques, an ultrasonic pulse of shear-waves is transmitted into the wall of a boiler tube through a predetermined path. The pulse is received at the end of the path. The relative attenuation of the amplitude of the received pulse is then compared with a reference relative attenuation for an undamaged tube to detect the presence of hydrogen damage. The measurement and comparison can be accomplished automatically by appropriate instrumentation; for example, a Krautkramer Branson USL-38 pulser/receiver manufactured by K.B. Aerotch, Louistown, Pennsylvania, U.S.A. has been used.

Although the method of the invention has been described above in connection with the use of dual shear-wave angle-beam transducers of a type which will typically embody a piezoelectric crystal, it is possible to employ an electromagnetic acoustic transducer to practice the invention.

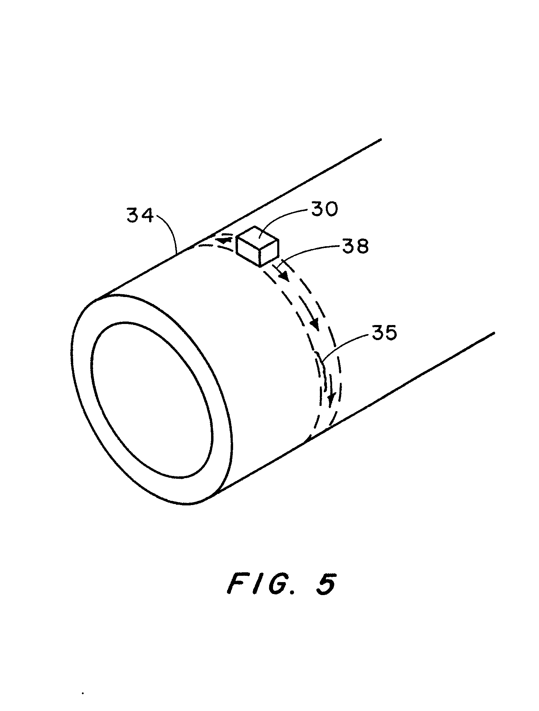

In an arrangement shown in Figure 5, an electromagnetic acoustic transducer 30 is utilised to introduce an angle-beam shear-wave into a boiler tube 34 through a sound path 38 to detect hydrogen damage 35. The wave travels 360 degrees, circumferentially, around the boiler tube 34. The relative attenuation of the received signal by a hydrogen damaged area is compared to the relative attenuation of an undamaged area to detect hydrogen damage. Use of a 0.45 MHz, centre frequency, meander coil electromagnetic acoustic transducer has yielded favourable results. The use of an electromagnetic acoustic transducer (EMAT) eliminates the need for couplant. In addition, excessive surface cleanliness is not needed.

0232613

## CLAIMS

1. A method of ultrasonically testing a boiler tube (14;24;34) for detecting hydrogen damage (15;35), the method comprising the steps of transmitting an ultrasonic pulse of shear-waves into the wall of the boiler tube (14;24;34) through a predetermined path, receiving the pulse at the end of the path, measuring relative attenuation of the amplitude of the received pulse, and comparing said relative attenuation with a reference relative attenuation.

2. A method as claimed in claim 1, comprising positioning a shear-wave angle-beam transmitting transducer (10) at a first position on the boiler tube (14) and a shear-wave angle-beam receiving transducer (12) at an axially spaced and aligned position, relative to the transmitting transducer (10), on the boiler tube (14), and wherein the transmitting step comprises transmitting an ultrasonic pulse from the transmitting transducer (10) to the receiving transducer (12) along an axial path.

3. A method as claimed in claim 1, comprising positioning a shear-wave angle-beam transmitting transducer (20) at a first position on the boiler tube (24) and a shear-wave angle-beam receiving transducer (22) at a circumferentially spaced and aligned position, relative to the transmitting transducer (20), on the boiler tube (24), and wherein the transmitting step comprises transmitting an ultrasonic pulse from the transmitting transducer (20) to the receiving transducer (22) along a circumferential path.

4. A method as claimed in claim 1, comprising positioning an electromagnetic acoustic transducer (30) on the surface of the boiler tube (34), and wherein the transmitting step comprises transmitting an ultrasonic pulse from the transducer (30) 360 degrees circumferentially around the boiler tube (34) to the transducer.

5. A method of ultrasonically testing a boiler tube (14;24) for detecting hydrogen damage (15), the method comprising positioning a plurality of shear-wave angle-beam transducers (10,12;20,22) at spaced locations on the outer surface of the boiler tube (14;24), a first one (10;20) of the transducers being positioned for transmitting ultrasonic waves into the tube (14;24) at a predetermined angle so that the waves travel along a predetermined path and a second one (12;22) of the transducers being positioned at the end of the path for receiving the waves, energising the first one (10;20) of the transducers to transmit an ultrasonic pulse of shear-waves along the path to the second one (12;22) of the transducers, and measuring the amplitude of waves received by the second one (12;22) of the transducers to detect the presence of hydrogen damage (15) within the tube (14;24).

6. A method as claimed in claim 5, wherein the first and second transducers (10,12) are arranged on the surface of the tube (14) at axially aligned and longitudinally spaced positions.

7. A method as claimed in claim 6, wherein the first and second transducers (10,12) are positioned at an angle of sixty degrees with respect to the axis of the tube (14).

8. A method as claimed in claim 5, wherein the first and second transducers (20,22) are arranged on the surface of the tube (24) at circumferentially aligned and spaced positions.

9. A method as claimed in any one of claims 5 to 8, comprising comparing the attenuation of the amplitude with a known attenuation to determine the presence of hydrogen damage (15).

10. A method as claimed in any one of claims 5 to 9, for testing a boiler tube (14;24) that includes tube segments and a weld (16;26) joining the segments, wherein the first and second transducers (10,12) are positioned at equally spaced distances beyond opposite sides of the weld (16).

11. A method as claimed in any one of claims 5 to 10, wherein the transducers (10,12;20,22) have a frequency in the range of 2.5 MHz to 10 MHz.

12. A method as claimed in any one of claims 5 to 10, wherein the transducers (10,12;20,22) have a frequency of 5 MHz.

FIG. 1

FIG. 2

FIG. 3

FIG. 4

FIG. 5